# EUROPEAN PATENT SPECIFICATION

(11) **EP 1 416 140 B1**
(45) Date of publication and mention of the grant of the patent: **25.05.2005**
(21) Application number: 02755854.3
(22) Date of filing: 06.08.2002
(51) Int. Cl.: F02D 41/00, F02D 41/40, F02D 41/08

(54) **FUEL INJECTION QUANTITY CONTROLLING METHOD AND DEVICE**
VERFAHREN UND VORRICHTUNG ZUR STEUERUNG DER KRAFTSTOFFEINSPRITZMENGE
PROCEDE ET DISPOSITIF DE DOSAGE DE LA QUANTITE DE CARBURANT INJECTE

(30) Priority: 10.08.2001 JP 2001244238
(43) Date of publication of application: 06.05.2004
(73) Proprietor: Bosch Automotive Systems Corporation, Tokyo 150-0002 (JP); TOYOTA JIDOSHA KABUSHIKI KAISHA, Toyota-shi, Aichi 471-8571 (JP)
(72) Inventor: UEDA, Atsushi, c/o Bosch Automotive Systems Corp., Higashimatsuyama-shi, Saitama 355-8603 (JP); OKAMOTO, Kenji, c/o Bosch Automotive Systems Corp., Higashimatsuyama-shi, Saitama 355-8603 (JP); KIBE, Kazuya, c/o Toyota Jidosha Kabushiki Kaisha, Toyota-shi, Aichi 471-8571 (JP); AMANO, Naoki, c/o Toyota Jidosha Kabushiki Kaisha, Toyota-shi, Aichi 471-8571 (JP)
(74) Representative: Schwabe, Hans-Georg, Dipl.-Ing.
(86) International application number: PCT/JP2002/008020
(87) International publication number: WO 2003/016697

(56) References cited:
- EP-A- 0 947 686
- JP-A- 2 023 252
- JP-A- 2 104 941
- JP-A- 10 252 530
- JP-A- 2001 152 948
- US-A- 6 053 150
- PATENT ABSTRACTS OF JAPAN vol. 2000, no. 23, 10 February 2001 (2001-02-10) & JP 2001 152948 A (TOYOTA MOTOR CORP), 5 June 2001 (2001-06-05)
- PATENT ABSTRACTS OF JAPAN vol. 014, no. 164 (M-0957), 30 March 1990 (1990-03-30) & JP 02 023252 A (NIPPON DENSO CO LTD), 25 January 1990 (1990-01-25)
- PATENT ABSTRACTS OF JAPAN vol. 1998, no. 14, 31 December 1998 (1998-12-31) & JP 10 252530 A (NISSAN MOTOR CO LTD), 22 September 1998 (1998-09-22)

## Description

### TECHNICAL FIELD

The present invention relates to a method and apparatus for controlling fuel injection quantity that are used for injecting a required quantity of high-pressure fuel accumulated in a common rail into cylinders of an internal combustion engine from injectors.

### BACKGROUND ART

Recent years have seen wide application in diesel engine systems of common rail type internal combustion engine fuel injection apparatuses configured so as to once accumulate high-pressure fuel supplied under pressure from a high-pressure pump in a common rail and, at electrically calculated and set injection timing, inject required amounts of the high-pressure fuel accumulated in the common rail into cylinders of the engine from injectors. It is known that in a diesel engine, reduction of the fuel injection rate during the first half of fuel injection when fuel is burned in the cylinders is effective for lowering combustion noise and the amount of nitrogen oxide (NOx) present in the exhaust gas. Conventionally, therefore, a pilot injection system has been used wherein, during injection of fuel from the injectors into the combustion chambers of the respective cylinders, the fuel injection is divided into main injection and pilot injection preceding the main injection, thereby lowering the fuel injection rate during the first half of the fuel injection.

The appropriate pilot injection quantity depends on the instantaneous engine operating condition. Although the pilot injection quantity differs with the volume of the diesel engine cylinders, it amounts to some several mm³, and when the pilot injection system is utilized, open/close control of the injector is conducted preceding the main injection so as to obtain the desired pilot injection quantity determined by calculation.

What become problems in this regard are the variance in injection quantity among individual fuel injection systems and change in injection quantity over the course of time. In other words, inconsistencies in the various components used in the fuel injection system and changes in their characteristics owing to aging cause deviation between the desired pilot injection quantity calculated by a microcomputer or the like and the actually injected actual pilot injection quantity. When such deviation occurs, the anticipated appropriate pilot injection quantity cannot be realized and, therefore, there arises not only the problem that the effect expected from the pilot injection cannot be realized but also the problem that, in the worst case, the pilot injection may vanish to worsen the combustion noise and emission performance.

An object of the present invention is to provide a method and apparatus for controlling fuel injection quantity that can overcome the aforesaid problems of the prior art.

Another object of the present invention is to provide a method and apparatus for controlling fuel injection quantity that enable pilot injection to be appropriately performed even when there are inconsistencies in the components used in the fuel injection system and/or changes in their characteristics owing to aging.

### DISCLOSURE OF THE INVENTION

The inventors accomplished the present invention by focusing on the fact that a correlation exits between the amount of deviation ΔQi between the desired value and actual value occurring with regard to the fuel injection quantity required for maintaining a diesel engine in idling operation state and the amount of deviation ΔQp between the desired value and actual value occurring with regard to the fuel injection quantity for pilot injection conducted preceding main injection. In accordance with the present invention, an appropriate actual pilot injection quantity is achieved by learning a value of ΔQi during idling operation of a diesel engine and correcting a desired pilot injection quantity calculated for pilot injection based on the so-obtained learned value.

A characterizing feature of the present invention is the point that, in a method for controlling fuel injection quantity that uses injectors to inject high-pressure fuel contained in a common rail into combustion chambers of an internal combustion engine dividedly by main injection and pilot injection preceding the main injection, the amount of deviation between the desired value and actual value occurring with regard to a fuel injection quantity required for maintaining the internal combustion engine in idling operation state is learned and a desired pilot injection quantity calculated for pilot injection is corrected using the learned amount of deviation obtained by the learning.

A configuration can be adopted wherein, based on the learned amount of deviation, the correction increases or decreases a desired pilot injection quantity for pilot injection calculated based on an operating condition or the like of the internal combustion engine. Although the learned amount of deviation can be used here as is, a configuration can instead be adopted that makes a change in the learned amount of deviation in accordance with an instantaneous operating condition of the internal combustion engine and the desired pilot injection quantity is corrected in accordance with the changed learned amount of deviation.

A configuration can be adopted wherein the appropriateness of the learned amount of deviation is decided from, for example, whether or not the learned amount of deviation is within a prescribed range, and when it is decided that the obtained learned amount of deviation is not an appropriate value, the desired pilot injection quantity is used as is, without effecting the correction based on the learned amount of deviation, so as to prevent the desired pilot injection quantity from being corrected to an inappropriate value in accordance with an inappropriate learned amount of deviation.

In order to enable learning of the amount of deviation to be performed appropriately during idling operation, it is possible to discriminate whether or not a prescribed disturbed state has arisen, and when the prescribed disturbed state has arisen, to, for example, terminate or suspend the operation for learning the amount of deviation so as to ensure that the value of the learned amount of deviation obtained by the learning is appropriate.

In order to improve the learning accuracy, it is preferable.to set a long period for learning, take numerous samples of the difference between the desired value and the actual value during the long period, and conduct the learning operation based on the numerous sampled values. Such a sampling operation, i.e., the learning period, is likely to extend across multiple operation cycles. It is therefore possible to improve learning accuracy by storing the sampled values in a nonvolatile memory such as an EEPROM or the like, or some other appropriate memory and obtain a learned amount of deviation based on numerous sampled values acquired across multiple operating cycles.

Another characterizing feature of the present invention is the point that, in an apparatus for controlling fuel injection quantity that uses injectors to inject high-pressure fuel contained in a common rail into combustion chambers of an internal combustion engine dividedly by main injection and pilot injection preceding the main injection, a configuration is adopted that comprises first arithmetic means for calculating a basic injection quantity indicating a desired value of fuel to be injected into a combustion chamber based on an operating condition of the internal combustion engine, second arithmetic means responsive to the first arithmetic means for calculating a desired pilot injection quantity matched to the basic injection quantity, decision means for deciding whether or not the internal combustion engine is in an idling operation state, learned value output means for, when the deciding means decides that the internal combustion engine is in the idling operation state, learning as a learned amount of deviation an amount of deviation between the desired value and an actual value occurring with regard to a fuel injection quantity required for maintaining the internal combustion engine in the idling operation state, means for correcting the desired pilot injection quantity based on the learned amount of deviation to acquire a corrected desired pilot injection quantity, and means for calculating a desired main injection quantity from the corrected desired pilot injection quantity and the basic injection quantity, the injection of fuel into the combustion chamber of the internal combustion engine being controlled in accordance with the desired main injection quantity and the corrected desired pilot injection quantity.

A configuration can be adopted wherein the basic injection quantity when the internal combustion engine is in the idling operation state is compared with a given basic idling injection quantity indicating a fuel injection quantity required for the internal combustion engine to maintain the idling operation state and the learned amount of deviation is calculated based on a difference obtained as a result of the comparison. The basic injection quantity when the internal combustion engine is in the idling operation state in this case can be defined as the calculation result in the first arithmetic means when the deciding means decides that the internal combustion engine is in the idling operation state. The given basic idling injection quantity can be acquired utilizing reference idling injection quantity data based on design data. A configuration can be adopted wherein the difference obtained as a result of the comparison is calculated by acquiring numerous learned sampled data by sampling at appropriate time intervals during the period in which the internal combustion engine is decided to be in the idling operation state, storing the acquired data in memory means, and calculating a learned amount of deviation by appropriately processing the stored learned sampled data. Since the learned amount of deviation acquired in this manner is an average value, it can be used as is but it is also possible to use the acquired learned amount of deviation after correcting it for the instantaneous rail pressure and/or basic injection quantity.

### BRIEF DESCRIPTION OF THE DRAWINGS

Fig. 1 is a schematic structural diagram showing an embodiment of a common rail type fuel injection apparatus for a vehicle internal combustion engine equipped with an apparatus for controlling fuel injection quantity according to the present invention.
Fig. 2 is a block diagram showing the configuration of a control unit shown in Fig. 1.
Fig. 3 is a detailed block diagram showing the configuration of a learned value output means shown in Fig. 2.
Fig. 4 is a graph showing an example of the relationship between the amount of deviation between a desired value and an actual value occurring with regard to an idling operation state and the amount of deviation between a desired value and an actual value occurring with regard to pilot injection.
Fig. 5 is a detailed block diagram showing the configuration of a rail pressure control section shown in Fig. 2.

### BEST MODE OF CARRYING OUT THE INVENTION

In order to clarify the present invention in greater detail, it will now be explained with reference to the attached drawings.

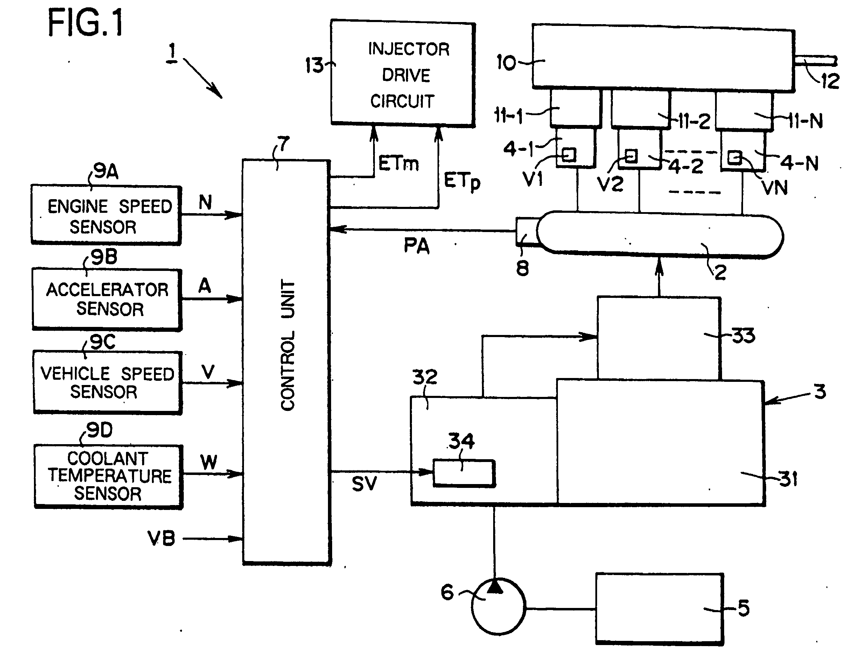

Fig. 1 is a schematic structural diagram showing an embodiment of a common rail type fuel injection apparatus for a vehicle internal combustion engine equipped with an apparatus for controlling fuel injection quantity according to the present invention. The fuel injection apparatus 1 is a fuel injection apparatus for a common rail type internal combustion engine that is used to supply fuel to the internal combustion engine of an internal combustion engine vehicle by injection. It is equipped with a common rail 2, a high-pressure pump assembly 3 for supplying high-pressure fuel to the common rail 2, and multiple injectors 4-1- 4-N for injecting high-pressure fuel accumulated in the common rail 2 into the combustion chambers of cylinders 11-1-11-N of an N-cylinder diesel engine 10. The injectors 4-1- 4-N are equipped with respective solenoid valves V1 - VN for fuel injection control. The solenoid valves V1 - VN are configured to be independently open/close controlled by an injector drive circuit 13 so that required amounts of high-pressure fuel are injected into associated cylinders at required timing, dividedly between main injection and preceding pilot injection. The configuration is such that rotational output from an output shaft 12 of the diesel engine 10 is transmitted to an unshown wheel driving device including a transmission.

The high-pressure pump assembly 3 consists of a high-pressure pump main unit 31 driven by the diesel engine 10, a fuel metering unit 32 and an inlet/outlet valve 33, which are integrally assembled. The fuel metering unit 32 is supplied with fuel from a fuel tank 5 by a feed pump 6. At the fuel metering unit 32, the fuel supplied from the feed pump 6 is pressure-regulated to the fuel pressure required by the diesel engine 10. The pressure-regulated fuel is sent to the inlet/outlet valve 33. The inlet/outlet valve 33 supplies the fuel received from the fuel metering unit 32 to a plunger chamber (not shown) of the high-pressure pump assembly 3 and supplies the fuel raised to a high pressure in the plunger chamber to the common rail 2 while ensuring that it does not flow back into the fuel metering unit 32. The regulation of the fuel pressure in the fuel metering unit 32 is conducted by open/close controlling a solenoid valve 34 provided in the fuel metering unit 32.

As explained later, the solenoid valve 34 is configured to be open/close controlled by a drive control signal SV from a control unit 7 so that the fuel pressure in the common rail 2 becomes a pressure matched to the instantaneous injection quantity required by the diesel engine 10. As an input signal, the control unit 7 receives an actual pressure signal PA from a pressure sensor 8 that detects the actual fuel pressure in the common rail 2 and is also input by an engine speed sensor 9A with an engine speed signal N representing the engine speed of the diesel engine 10 and by an accelerator sensor 9B with an accelerator signal A representing the amount of manipulation of an accelerator pedal (not shown). The control unit 7 is additionally input by a vehicle speed sensor 9C with a vehicle speed signal V representing the vehicle speed, by a coolant temperature sensor 9D with a coolant temperature signal W representing the coolant temperature of the diesel engine 10, and with a battery voltage signal VB representing the terminal voltage of an unshown battery.

The drive control signal SV output by the control unit 7 for open/close controlling the solenoid valve 34 is a pulse signal whose duty ratio is determined in the control unit 7 as an output value for controlling the solenoid valve 34. By this, the flow rate of the high-pressure fuel flowing from the high-pressure pump main unit 31 to the common rail 2 can be regulated and the pressure of the high-pressure fuel in the common rail 2 can be controlled to a prescribed pressure by this flow rate regulation. It is noted that the configuration of the high-pressure pump assembly 3 for open/close operating the solenoid valve 34 by such duty ratio control to thereby effect flow rate regulation of the fuel is itself known, and, therefore, detailed explanation of the high-pressure pump assembly 3 is omitted.

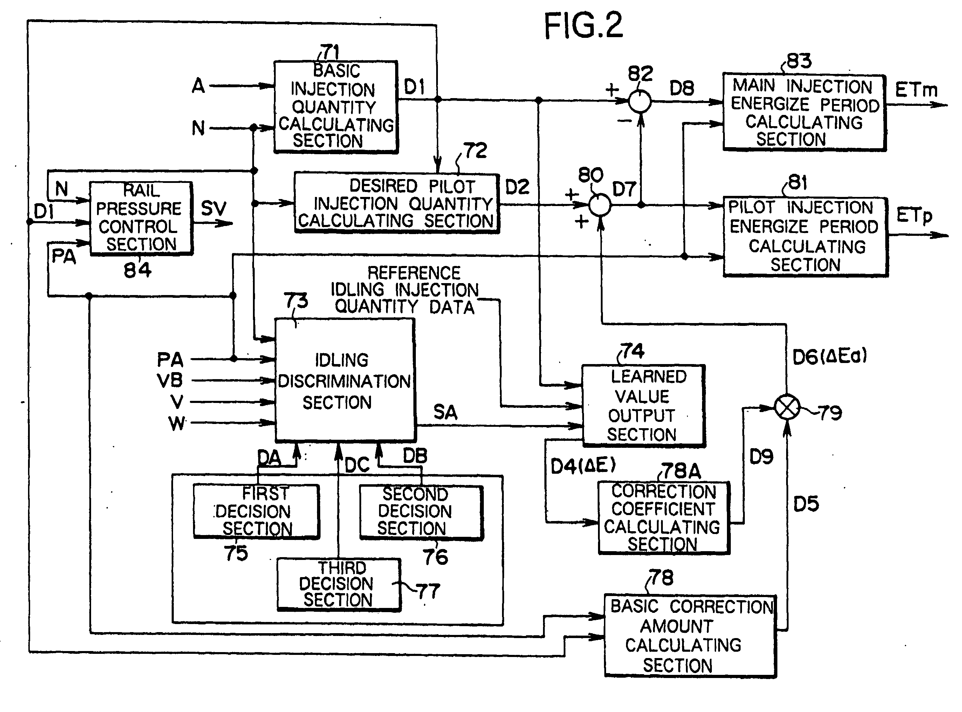

Fig. 2 is a block diagram showing the configuration of the control unit 7. A basic injection quantity calculating section 71 uses the engine speed signal N and accelerator signal A to calculate, as a basic injection quantity, the injection quantity required to be supplied into the combustion chambers of the cylinders of the diesel engine 10 in order to respond to the instantaneous intention of the driver and outputs basic injection quantity data D1 representing the so-acquired basic injection quantity.

A desired pilot injection quantity calculating section 72 uses the basic injection quantity data D1 and the engine speed signal N to calculate a desired pilot injection quantity matched to the instantaneous basic injection quantity represented by the basic injection quantity data D1 and outputs desired pilot injection quantity data D2 representing the calculation result.

When the pilot injection quantity is controlled based on the so-acquired desired pilot injection quantity data D2, inconsistencies among the injectors and other components in the fuel injection apparatus 1 and changes in their characteristics owing to aging cause the pilot injection quantity actually injected into the combustion chambers to deviate from the value represented by the desired pilot injection quantity data D2, so that such inconveniences arise as that the effect expected from the pilot injection cannot be realized and, in some cases, the combustion noise becomes larger rather than smaller and the emission performance is degraded.

So as to effect appropriate correction with respect to the desired pilot injection quantity data D2 for ensuring that the actual pilot injection quantity is an injection quantity corresponding to the desired pilot injection quantity data D2, the fuel injection apparatus 1 is configured to learn the amount of deviation between the desired value and actual value occurring with regard to the fuel injection quantity required for maintaining the diesel engine 10 in the idling operation state and to correct the desired pilot injection quantity calculated for pilot injection using the learned amount of deviation obtained by the learning.

For this, the fuel injection apparatus 1 is equipped with an idling discrimination section 73 for deciding whether or not the diesel engine 10 is in the idling operation state and a learned value output section 74 for, when the idling discrimination section 73 decides that the diesel engine 10 is in the idling operation state, acquiring a learned amount of deviation by learning the amount of deviation between the desired value and actual value occurring with regard to the fuel injection quantity required for maintaining the diesel engine 10 in the idling operation state.

The idling discrimination section 73 is input with the engine speed signal N, actual pressure signal PA, battery voltage signal VB, vehicle speed signal V and coolant temperature signal W representing the temperature of the diesel engine 10 coolant, and further with first decision data DA from a first decision section 75 for deciding whether or not the diesel engine 10 is in a transient state, second decision data DB from a second decision section 76 for deciding whether or not the diesel engine 10 is in a starting state, and third decision data DC from a third decision section 77 for deciding whether or not the diesel engine 10 is in a loaded state.

The idling discrimination section 73 is configured to use the input signals and input data to decide whether or not the diesel engine 10 is in the idling operation state and, when it decides that the diesel engine 10 is in the idling operation state, outputs an idling state signal SA.

This embodiment is configured to decide that the diesel engine 10 is in the idling operation state when all of the following conditions (1) - (9) are satisfied:
(1) The amount of accelerator manipulation as indicated by the accelerator signal A is zero.
(2) The battery voltage as indicated by the battery voltage signal VB is within a prescribed range of variation.
(3) Variation of the coolant temperature as indicated by the coolant temperature signal W is stable at about zero.
(4) The engine speed as indicated by the engine speed signal N is not greater than a prescribed value.
(5) The vehicle speed as indicated by the vehicle speed signal V is zero.
(6) The rail pressure as indicated by the actual pressure signal PA is the prescribed high pressure during idling.
(7) The first decision data DA does not indicate that the engine is in a transient state.
(8) The second decision data DB does not indicate that the engine is in the starting state.
(9) The third decision data DC does not indicate that the engine is in a loaded state.

It is noted that the foregoing is only one example of the idling discrimination and the purpose is not to limit the configuration of the idling discrimination section 73 to this one example; and, for example, idling operation state can be decided when a certain number of (1) - (9) are satisfied or, of course, it is otherwise possible to make the idling discrimination based on other appropriate decision criteria.

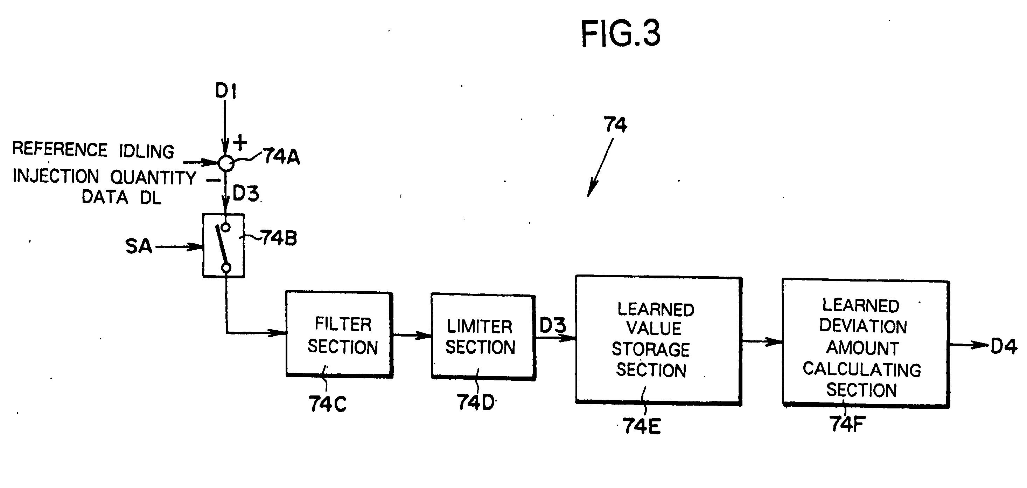

Next, the learned value output section 74 will be explained with reference to Fig. 3. The basic injection quantity data D1 from the basic injection quantity calculating section 71 is, at an adder 74A, added in the indicated polarity to data DL representing a reference idling injection quantity required for maintaining the diesel engine 10 in the idling operation state. In other words, the calculation D1 - DL (=ΔQi) is effected and difference data D3 representing the difference ΔQi is sent through a switch 74B open/close controlled in response to the idling state signal SA to a filter section 74C where it is removed of noise components and then sent to a limiter section 74D.

The purpose of the switch 74B is to enable the learning of the amount of deviation during idling operation to be performed appropriately. The switch 74B responds to the idling state signal SA from the idling discrimination section 73 to be open/close controlled so as to be closed when the decision is "idling" and be opened when the decision is "not idling," whereby the aforesaid purpose can be achieved. This embodiment is configured so that the decision as to whether or not the idling operation state is present is made also taking into account the first to third decision data DA, DB and DC indicating whether or not prescribed disturbed states prevail, and when a prescribed disturbed state prevails, the switch 74B is opened to stop the operation of learning the amount of deviation, thereby ensuring that the value of the learned amount of deviation acquired by the learning is appropriate.

When the value of the amount of deviation ΔQi indicated by the difference data D3 is within a prescribed range, the limiter section 74D outputs the difference data D3 as is. On the other hand, when the amount of deviation ΔQi indicated by the difference data D3 is not within the prescribed range, the limiter section 74D outputs as the value of the difference data D3 at that time whichever value between an upper limit value ΔQia and a lower limit value ΔQib defined beforehand is the appropriate value.

The difference data D3 output by the limiter means section D in this manner is sent to a learned value storage section 74E as one learned value to be stored therein. As the learned value storage section 74E, there can be used a memory, e.g., an EERPOM, that can retain stored data even if a key switch (not shown) is turned off to stop the supply of power to the fuel injection apparatus 1.

The adder 74A is configured to calculate the amount of deviation ΔQi at prescribed time intervals based on, for example, clock pulses in the system and to sequentially output the so-acquired difference data D3 at prescribed time intervals. Since switch 74B is closed in response to the idling state signal SA only when the idling discrimination section 73 decides that the diesel engine 10 is in the idling operation state, only difference data D3 when the diesel engine 10 is surely in the idling operation state are accumulated in the learned value storage section 74E. This enables highly reliable difference data to be acquired.

As will be understood from the foregoing explanation, this accumulation is conducted whenever the idling discrimination section 73 decides that the diesel engine 10 is in the idling operation state, so that the accumulation of the difference data D3 extends across multiple operating cycles of the diesel engine 10.

Specifically, for enhancing the learning accuracy, it is preferable to set a long period for the learning, take numerous samples of the difference between the desired value and the actual value during the long period, and conduct the learning operation based on the numerous sampled values. Such a sampling operation, i.e., the learning period, is likely to extend across multiple operation cycles. A configuration is therefore adopted for improving the learning accuracy by storing the sampled values in the learned value storage section 74E constituted as an EEPROM or other such nonvolatile memory and obtaining a learned amount of deviation based on numerous sampled values acquired across multiple operating cycles.

A learned deviation amount calculating section 74F calculates a learned deviation amount ΔE by taking the simple average, moving average or other such average value of the multiple difference data D3 accumulated in the learned value storage section 74E and outputs learned value data D4 representing the learned deviation amount ΔE obtained by this calculation.

The learned value data D4 acquired in the learned value output section 74 is the learned value of the amount of deviation between the desired value and actual value occurring with regard to the fuel injection quantity required for maintaining the diesel engine 10 in the idling operation state and this learned value has a correlation to the amount of deviation between the desired value and actual value occurring with regard to the fuel injection quantity for the pilot injection performed before the main injection.

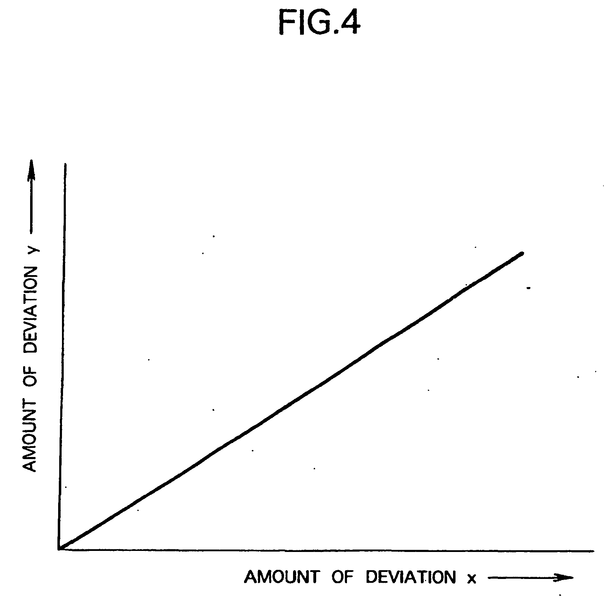

Fig. 4 is a graph showing an example of the relationship between the amount of deviation *x* between the desired value and actual value occurring with regard to the fuel injection quantity required for maintaining the diesel engine 10 in the idling operation state and the amount of deviation *y* between the desired value and actual value occurring with regard to the fuel injection quantity for pilot injection. In this example, the amount of deviations *x* and *y* have a substantially linear relationship, so that amount of deviation *y* can be determined by acquiring the amount of deviation *x* through learning. The correlation between the amount of deviations *x* and *y* shown by the graph of Fig. 4 is only one example and, in actual practice, each system is tested and the nature of the correlation is determined from the test results.

Returning to Fig. 2, in order to use this correlation to correct the desired pilot injection quantity data D2, the learned value data D4 is sent to a correction coefficient calculating section 78A. The correction coefficient calculating section 78A stores mapped data corresponding to the graph shown in Fig. 4, and the correction coefficient calculating section 78A refers to the mapped data to carry out a calculation for obtaining a correction coefficient based on the learned value data D4. A basic correction amount calculating section 78 is one for using the actual pressure signal PA and the basic injection quantity data D1 to calculate a basic correction amount in accordance with the instantaneous operating condition of the diesel engine 10 and is provided so as to enable the correction of the desired pilot injection quantity data D2 to be performed with higher accuracy

A multiplier 79 conducts multiplication processing on basic correction amount data D5 and correction coefficient data D9. This multiplication processing corrects the learned deviation amount ΔE, and the multiplier 79 outputs a corrected learned value data D6 representing the corrected learned amount of deviation ΔEa resulting from the calculation. The corrected learned value data D6 is sent to an adder 80. As processing for correcting the basic correction amount data D5 using the correction coefficient data D9 is not absolutely necessary here, it is, depending on the circumstances, possible to adopt a configuration in which the learned value data D4 is sent directly to the adder 80 without modification so as to correct the desired pilot injection quantity data D2 by the learned value data D4.

The adder 80 receives the desired pilot injection quantity data D2, and the desired pilot injection quantity data D2 and corrected learned value data D6 are here added in the indicated polarity to calculate the corrected desired pilot injection quantity as a result. Corrected desired pilot injection quantity data D7 representing the corrected desired pilot injection quantity obtained in this manner is sent to a pilot injection energize period calculating section 81 and is also sent to an adder 82. The adder 82 receives the basic injection quantity data D1, and the basic injection quantity data D1 and corrected desired pilot injection quantity data D7 are added here in the indicated polarity. The result of subtracting the desired pilot injection quantity data D2 from the basic injection quantity data D1 is obtained as desired main injection quantity data D8 representing the desired value of the instantaneous main injection quantity and the desired main injection quantity data D8 is sent from the adder 82 to a main injection energize period calculating section 83.

The main injection energize period calculating section 83 uses the desired main injection quantity data D8 to calculate the injector energization period (valve open period) required for injecting the desired main injection quantity indicated by the desired main injection quantity data D8 into the combustion chamber of the diesel engine 10 and outputs main injection energize period data ETm representing the result of the calculation.

The pilot injection energize period calculating section 81 uses the corrected desired pilot injection quantity data D7 to calculate the injector energization period (valve open period) required for injecting the corrected desired pilot injection quantity indicated by the corrected desired pilot injection quantity data D7 into the combustion chamber of the diesel engine 10 and outputs pilot injection energize period data ETp representing the result of the calculation.

The main injection energize period data ETm and pilot injection energize period data ETp are sent to the injector drive circuit 13 and the injector drive circuit 13 controls the operation of the injectors 4-1 ― 4-N based thereon.

In the configuration shown in Fig. 2, the desired pilot injection quantity data D2 is constantly corrected by the corrected learned value data D6. However, it is also possible to adopt a configuration wherein the appropriateness of the learned deviation amount ΔE is discriminated from, for instance, whether or not the learned deviation amount ΔE is within a prescribed range, and when it is found that the obtained learned deviation amount ΔE is not an appropriate value, the desired pilot injection quantity data D2 is used as is, without effecting the aforesaid correction based on the learned deviation amount ΔE, thereby preventing the desired pilot injection quantity data D2 from being corrected to an inappropriate value in accordance with an inappropriate learned amount of deviation.

Reference symbol 84 designates a rail pressure control section for controlling the fuel pressure of the common rail 2 in response to the basic injection quantity data D1, i.e., controlling the common rail pressure in accordance with the basic injection quantity. The rail pressure control section 84 is input not only with the basic injection quantity data D1 but also with the engine speed signal N and actual pressure signal PA, and is configured to compare a desired rail pressure calculated in accordance with the basic injection quantity data D1 and engine speed signal N with the actual rail pressure indicated by the actual pressure signal PA and to output the drive control signal SV for open/close controlling the solenoid valve 34 to maintain the fuel pressure in the common rail 2 at the desired rail pressure.

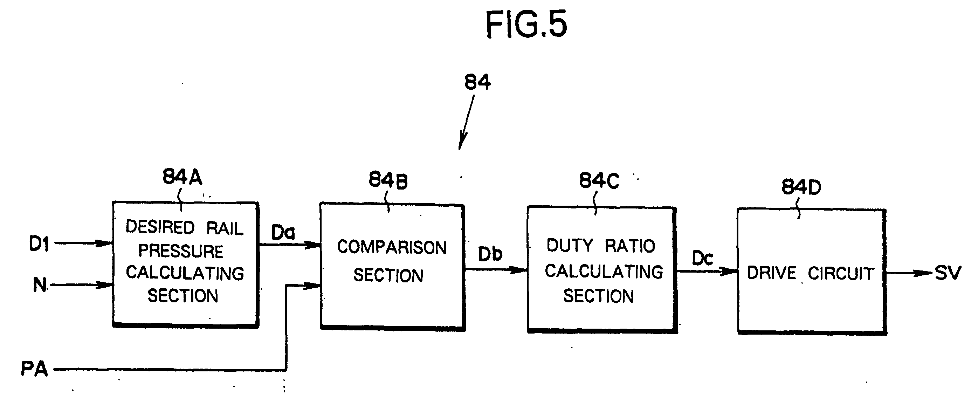

Fig. 5 is a detailed block diagram of the rail pressure control section 84. The rail pressure control section 84 comprises a desired rail pressure calculating section 84A for calculating desired rail pressure data Da representing a desired rail pressure from the basic injection quantity data D1 and engine speed signal N, a comparison section 84B responsive to the desired rail pressure data Da and actual pressure signal PA for outputting pressure difference data Db representing the pressure difference ΔP between the desired rail pressure and actual rail pressure, and a duty ratio calculating section 84C responsive to the pressure difference data Db for calculating a duty ratio data Dc representing the duty ratio of the drive control signal SV required for controlling the opening of the solenoid valve 34 so as to make the pressure difference ΔP zero. A drive circuit 84D responsive to the duty ratio data Dc outputs a drive control signal SV having the duty ratio indicated by the duty ratio data Dc, and the drive control signal SV on/off drives the solenoid valve 34 for controlling the discharge rate so as to control the fuel pressure in the common rail 2 to the value indicated by the desired rail pressure data Da.

Since the fuel injection apparatus 1 is configured in the foregoing manner, the learned value output section 74 learns the amount of deviation between the desired value and an actual value occurring with regard to the fuel injection quantity required for maintaining the diesel engine 10 in the idling operation state and outputs the learned value data D4 representing the learned deviation amount ΔE with high accuracy. The basic correction amount calculating section 78 is responsive to the operating condition of the diesel engine 10 for outputting the basic correction amount data D5 representing the basic correction amount to be multiplied by the correction coefficient. On the other hand, the correction coefficient calculating section 78A calculates a correlation coefficient based on the learned value data D4 and outputs the correction coefficient data D9. The multiplier 79 multiplies the correction coefficient data D9 and basic correction amount data D5 and outputs the corrected learned value data D6 representing the corrected learned amount of deviation Δ Ea which, as a result of this multiplication processing, reflects the instantaneous operating state with high accuracy. Then the adder 80 carries out a calculation using the desired pilot injection quantity data D2 representing a desired pilot injection quantity matched to the basic injection quantity, and the corrected learned value data D6.

As a result, the corrected desired pilot injection quantity data D7 representing the corrected desired pilot injection quantity is output and this corrected desired pilot injection quantity data D7 is sent to the pilot injection energize period calculating section 81. Based on the corrected desired pilot injection quantity represented by the corrected desired pilot injection quantity data D7, the pilot injection energize period calculating section 81 calculates the injector energization period required for injection into the combustion chambers of the diesel engine 10 and the injector drive circuit 13 controls the open/close operation of the injectors 4-1 ― 4-N based on the pilot injection energize period data ETp represented by the calculation result.

Therefore, since no discrepancy arises between the desired pilot injection quantity calculated by the desired pilot injection quantity calculating section 72 and the actual pilot injection quantity actually injected, an appropriate pilot injection quantity matched to the instantaneous operating condition can be injected into the combustion chamber of the diesel engine 10 before the main injection even if changes occurs with aging. As a result, the fuel injection rate during the first half of fuel injection can be lowered as anticipated to enable good reduction of combustion noise and nitrogen oxide in the exhaust gas.

### INDUSTRIAL APPLICABILITY

As set out in the foregoing, the method and apparatus for controlling fuel injection quantity according to the present invention enable pilot injection to be performed appropriately and, as such, contribute to enhanced diesel engine operating technology.

## Claims

1. A method for controlling fuel injection quantity that uses injectors to inject high-pressure fuel contained in a common rail into combustion chambers of an internal combustion engine dividedly by main injection and pilot injection preceding the main injection, the method for controlling fuel injection quantity being **characterized in that**:
an amount of deviation between a desired value and an actual value occurring with regard to a fuel injection quantity required for maintaining the internal combustion engine in idling operation state is learned; and
a desired pilot injection quantity calculated for the pilot injection is corrected using the learned amount of deviation obtained by the learning.

2. A method for controlling fuel injection quantity as claimed in claim 1, wherein the desired pilot injection quantity is calculated in accordance with an operating condition of the internal combustion engine.

3. A method for controlling fuel injection quantity as claimed in claim 1 or 2, wherein the pilot injection quantity is controlled in accordance with a corrected desired pilot injection quantity obtained by adding the desired pilot injection quantity and the learned amount of deviation.

4. A method for controlling fuel injection quantity as claimed in claim 1, wherein a change is made in the learned amount of deviation in accordance with an instantaneous operating condition of the internal combustion engine and the desired pilot injection quantity is corrected in accordance with the changed learned amount of deviation.

5. A method for controlling fuel injection quantity as claimed in claim 1, wherein the appropriateness of the learned amount of deviation is decided, and when it is decided that the learned amount of deviation is not an appropriate value, the desired pilot injection quantity is used as is, without effecting the correction based on the learned amount of deviation.

6. A method for controlling fuel injection quantity as claimed in claim 1, wherein whether or not a prescribed disturbed state has arisen during idling operation of the internal combustion engine is discriminated, and when the prescribed disturbed state has arisen, an operation for learning the amount of deviation is terminated or suspended.

7. An apparatus for controlling fuel injection quantity that uses injectors to inject high-pressure fuel contained in a common rail into combustion chambers of an internal combustion engine dividedly by main injection and pilot injection preceding the main injection, the apparatus for controlling fuel injection quantity being **characterized in** comprising:
first arithmetic means for calculating a basic injection quantity indicating a desired value of fuel to be injected into a combustion chamber based on an operating condition of the internal combustion engine;
second arithmetic means responsive to the first arithmetic means for calculating a desired pilot injection quantity matched to the basic injection quantity;
decision means for deciding whether or not the internal combustion engine is in an idling operation state;
learned value output means for, when the deciding means decides that the internal combustion engine is in the idling operation state, learning as a learned amount of deviation an amount of deviation between the desired value and an actual value occurring with regard to a fuel injection quantity required for maintaining the internal combustion engine in the idling operation state;
means for correcting the desired pilot injection quantity based on the learned amount of deviation to acquire a corrected desired pilot injection quantity; and
means for calculating a desired main injection quantity from the corrected desired pilot injection quantity and the basic injection quantity,
the injection of fuel into the combustion chambers of the internal combustion engine being controlled in accordance with the desired main injection quantity and the corrected desired pilot injection quantity.

8. An apparatus for controlling fuel injection quantity as claimed in claim 7, wherein the basic injection quantity when the internal combustion engine is in the idling operation state is compared with a given basic idling injection quantity indicating a fuel injection quantity required for the internal combustion engine to maintain the idling operation state and the learned amount of deviation is calculated based on a difference obtained as a result of the comparison.

9. An apparatus for controlling fuel injection quantity as claimed in claim 8, wherein numerous samples of the difference are taken at appropriate time intervals when the internal combustion engine is in the idling operation state and stored in memory means as numerous learned sampled data, and learned amount of deviation is acquired by processing the stored learned sampled data.

10. An apparatus for controlling fuel injection quantity as claimed in claim 7, wherein the learned amount of deviation is corrected in accordance with the instantaneous operating condition and the corrected desired pilot injection quantity is acquired by correcting the desired pilot injection quantity based on the corrected learned amount of deviation.

11. An apparatus for controlling fuel injection quantity as claimed in claim 7, wherein the decision means decides whether or not a prescribed disturbed state has arisen in the internal combustion engine, and when the prescribed disturbed state has arisen, terminates or suspends an operation for learning the amount of deviation.

## Patentansprüche

1. Verfahren zum Steuern einer Kraftstoffeinspritzmenge, das Einspritzvorrichtungen verwendet, um einen Kraftstoff unter hohem Druck, der in einer gemeinsamen Druckleitung enthalten ist, in geteilter Weise mittels Haupteinspritzung und Voreinspritzung, die der Haupteinspritzung voraus geht, in Verbrennungskammern eines Verbrennungsmotors einzuspritzen, welches Verfahren zum Steuern der Kraftstoffeinspritzmenge **dadurch gekennzeichnet ist, dass**:
eine Größe einer Abweichung zwischen einem gewünschten Wert und einem tatsächlichen Wert, die in Bezug auf eine Kraftstoffeinspritzmenge auftritt, die zur Aufrechterhaltung eines Leerlaufbetriebs des Verbrennungsmotors erforderlich ist, gelernt wird; und
dass eine gewünschte Voreinspritzungsmenge, die für die Voreinspritzung berechnet wird, unter Verwendung der gelernten Größe der Abweichung, die mit Hilfe des Lernvorgangs erhalten wird, korrigiert wird.

2. Verfahren zum Steuern der Kraftstoffeinspritzmenge nach Anspruch 1, wobei die gewünschte Voreinspritzungsmenge in Entsprechung zu einem Betriebszustand des Verbrennungsmotors berechnet wird.

3. Verfahren zum Steuern der Kraftstoffeinspritzmenge nach Anspruch 1 oder 2, wobei die Voreinspritzungsmenge in Entsprechung zu einer korrigierten gewünschten Voreinspritzungsmenge gesteuert wird, die durch Addieren der gewünschten Voreinspritzungsmenge und der gelernten Größe der Abweichung erhalten wird.

4. Verfahren zum Steuern der Kraftstoffeinspritzmenge nach Anspruch 1, wobei eine Änderung an der gelernten Größe der Abweichung in Entsprechung zu einem momentanen Betriebszustand des Verbrennungsmotors vorgenommen wird und wobei die gewünschte Voreinspritzungsmenge in Entsprechung zu der geänderten, gelernten Größe der Abweichung korrigiert wird.

5. Verfahren zum Steuern der Kraftstoffeinspritzmenge nach Anspruch 1, wobei die Eignung der gelernten Größe der Abweichung beurteilt wird und wobei dann, wenn bestimmt wird, dass die gelernte Größe der Abweichung keinen geeigneten Wert darstellt, die gewünschte Voreinspritzungsmenge, so wie sie ist, verwendet wird, und zwar ohne dass die Korrektur basierend auf der gelernten Größe der Abweichung bewirkt wird.

6. Verfahren zum Steuern der Kraftstoffeinspritzmenge nach Anspruch 1, wobei unterschieden wird, ob während eines Leerlaufbetriebs des Verbrennungsmotors ein vorgeschriebener Störungszustand aufgetreten ist oder nicht, und wobei dann, wenn der vorgeschriebene Störungszustand aufgetreten ist, ein Vorgang zum Lernen der Größe der Abweichung abgebrochen oder unterbrochen wird.

7. Vorrichtung zum Steuern einer Kraftstoffeinspritzmenge, welche Einspritzvorrichtungen dazu verwendet, um Kraftstoff, der in einer gemeinsamen Druckleitung enthalten ist, unter hohem Druck in geteilter Weise mittels einer Haupteinspritzung und einer Voreinspritzung, die der Haupteinspritzung voraus geht, in Verbrennungskammern eines Verbrennungsmotors einzuspritzen, welche Vorrichtung zum Steuern der Kraftstoffeinspritzmenge **dadurch gekennzeichnet ist, dass** diese umfasst:
ein erstes Rechenmittel, um eine Grundeinspritzmenge, die einen gewünschten Wert des in eine Verbrennungskammer einzuspritzenden Kraftstoffs anzeigt, auf der Grundlage eines Betriebszustands des Verbrennungsmotors zu berechnen;
ein zweites Rechenmittel, das auf das erste Rechenmittel anspricht, um eine gewünschte Voreinspritzungsmenge, die auf die Grundeinspritzmenge abgestimmt ist, zu berechnen;
ein Entscheidungsmittel, um zu entscheiden, ob sich der Verbrennungsmotor in einem Leerlaufbetriebszustand befindet oder nicht;
ein Lernwert-Ausgabemittel, um dann, wenn das Entscheidungsmittel entscheidet, dass sich der Verbrennungsmotor in dem Leerlaufbetriebszustand befindet, als gelernte Größe der Abweichung eine Größe der Abweichung zwischen dem gewünschten Wert und einem tatsächlichen Wert, die in Bezug auf eine Kraftstoffeinspritzmenge auftritt, die zur Aufrechterhaltung des Verbrennungsmotors in dem Leerlaufbetriebszustand erforderlich ist, zu lernen;
ein Mittel zum Korrigieren der gewünschten Voreinspritzungsmenge auf der Grundlage der gelernten Größe der Abweichung zu korrigieren, um eine korrigierte, gewünschte Voreinspritzungsmenge zu erhalten; und
ein Mittel zum Berechnen einer gewünschten Haupteinspritzungsmenge aus der korrigierten, gewünschten Voreinspritzungsmenge und der Grundeinspritzungsmenge,
wobei die Einspritzung von Kraftstoff in die Verbrennungskammern des Verbrennungsmotors in Entsprechung zu der gewünschten Haupteinspritzungsmenge und der korrigierten, gewünschten Voreinspritzungsmenge gesteuert wird.

8. Vorrichtung zum Steuern einer Kraftstoffeinspritzmenge nach Anspruch 7, wobei die Grundeinspritzmenge dann, wenn sich der Verbrennungsmotor in dem Leerlaufbetriebszustand befindet, mit eine vorgegebenen Leerlauf-Grundeinspritzmenge verglichen wird, die einer Kraftstoffeinspritzmenge anzeigt, die zur Aufrechterhaltung des Leerlaufbetriebszustands des Verbrennungsmotors erforderlich ist, und wobei die gelernte Größe der Abweichung auf der Grundlage einer Differenz berechnet wird, die als Ergebnis des Vergleichs erhalten wird.

9. Vorrichtung zum Steuern einer Kraftstoffeinspritzmenge nach Anspruch 8, wobei zahlreiche Probenwerte für die Differenz in geeigneten Zeitintervallen herangezogen werden, wenn sich der Verbrennungsmotor in dem Leerlaufbetriebszustand befindet, und als mehrere gelernte abgetastete Datenwerte in einem Speichermittel abgespeichert werden und wobei die gelernte Größe der Abweichung durch Verarbeiten der abgespeicherten, gelernten, abgetasteten Datenwerte erhalten wird.

10. Vorrichtung zum Steuern einer Kraftstoffeinspritzmenge nach Anspruch 7, wobei die gelernte Größe der Abweichung in Entsprechung zu dem momentanen Betriebszustand korrigiert wird und wobei die korrigierte, gewünschte Voreinspritzungsmenge durch Korrigieren der gewünschten Voreinspritzungsmenge auf der Grundlage der korrigierten, erlernten Größe der Abweichung erhalten wird.

11. Vorrichtung zum Steuern einer Kraftstoffeinspritzmenge nach Anspruch 7, wobei das Entscheidungsmittel bestimmt, ob ein vorgeschriebener Störungszustand in dem Verbrennungsmotor aufgetreten ist oder nicht, und wobei dann, wenn der vorgeschriebene Störungszustand aufgetreten ist, ein Vorgang zum Lernen der Größe der Abweichung abgebrochen oder unterbrochen wird.

## Revendications

1. Procédé de commande de quantité d'injection de carburant, qui utilise des injecteurs afin d'injecter du carburant haute pression contenu dans une rampe commune dans les chambres de combustion d'un moteur à combustion interne de manière divisée par injection principale et par injection pilote précédant l'injection principale, le procédé de commande de quantité d'injection de carburant étant **caractérisé en ce que** :
une quantité d'écart entre une valeur souhaitée et une valeur réelle apparaissant en rapport avec une quantité d'injection de carburant pour maintenir le moteur à combustion interne dans un état de fonctionnement au ralenti est acquise, et
une quantité d'injection pilote souhaitée calculée pour l'injection pilote est corrigée en utilisant la quantité d'écart acquise obtenue par l'apprentissage.

2. Procédé de commande de quantité d'injection de carburant selon la revendication 1, dans lequel la quantité d'injection pilote souhaitée est calculée selon une condition de fonctionnement du moteur à combustion interne.

3. Procédé de commande de quantité d'injection de carburant selon la revendication 1 ou 2, dans lequel la quantité d'injection pilote est commandée selon une quantité d'injection pilote souhaitée corrigée, obtenue en ajoutant la quantité d'injection pilote souhaitée à la quantité d'écart acquise.

4. Procédé de commande de quantité d'injection de carburant selon la revendication 1, dans lequel un changement de la quantité d'écart acquise est effectué selon une condition de fonctionnement instantanée du moteur à combustion interne, et la quantité d'injection pilote souhaitée est corrigée selon la quantité d'écart acquise modifiée.

5. Procédé de commande de quantité d'injection de carburant selon la revendication 1, dans lequel la justesse de la quantité d'écart acquise est décidée, et quand on décide que la quantité d'écart acquise n'est pas une valeur appropriée, la quantité d'injection pilote souhaitée est utilisée telle quelle, sans effectuer la correction basée sur la quantité d'écart acquise.

6. Procédé de commande de quantité d'injection de carburant selon la revendication 1, dans lequel on distingue si oui ou non un état perturbé prévu est survenu durant le fonctionnement au ralenti du moteur à combustion interne, et lorsque l'état perturbé prévu est survenu, une opération pour acquérir la quantité d'écart est terminée ou suspendue.

7. Dispositif de commande de quantité d'injection de carburant qui utilise des injecteurs pour injecter du carburant haute pression contenu dans une rampe commune dans les chambres de combustion d'un engin à combustion interne de manière divisée par injection principale et injection pilote précédant l'injection principale, le dispositif de commande de quantité d'injection de carburant étant **caractérisé en ce qu'**il comporte :
des premiers moyens arithmétiques pour calculer une quantité d'injection de base indiquant une valeur de carburant souhaitée devant être injectée dans une chambre de combustion sur la base d'une condition de fonctionnement du moteur à combustion interne,
des seconds moyens arithmétiques réactifs aux premiers moyens arithmétiques pour calculer une quantité d'injection pilote souhaitée correspondant à la quantité d'injection de base,
des moyens de décision pour décider si le moteur à combustion interne est dans un état de fonctionnement au ralenti ou non,
des moyens de sortie de valeur acquise pour, lorsque les moyens de décision décident que le moteur à combustion interne est dans l'état de fonctionnement au ralenti, acquérir comme quantité d'écart acquise une quantité d'écart entre la valeur souhaitée et une valeur réelle survenant en rapport avec une quantité nécessaire d'injection de carburant pour maintenir le moteur à combustion interne dans l'état de fonctionnement au ralenti,
des moyens pour corriger la quantité d'injection pilote souhaitée sur la base de la quantité d'écart acquise pour acquérir une quantité souhaitée d'injection pilote corrigée, et
des moyens pour calculer une quantité d'injection principale souhaitée à partir de la quantité d'injection pilote souhaitée corrigée et la quantité d'injection de base,
l'injection de carburant dans les chambres de combustion du moteur à combustion interne étant commandée selon la quantité d'injection principale souhaitée et la quantité d'injection pilote souhaitée corrigée.

8. Dispositif de commande de quantité d'injection de carburant selon la revendication 7, dans lequel la quantité d'injection de base, lorsque le moteur à combustion interne est dans l'état de fonctionnement au ralenti, est comparée à une quantité d'injection au ralenti de base donnée indiquant une quantité d'injection de carburant nécessaire pour le moteur à combustion interne pour maintenir l'état de fonctionnement au ralenti, et la quantité d'écart acquise est calculée sur la base d'une différence obtenue en résultat de la comparaison.

9. Dispositif de commande de quantité d'injection de carburant selon la revendication 8, dans lequel de nombreux échantillons de la différence sont pris à des intervalles de temps appropriés lorsque le moteur à combustion interne est dans un état de fonctionnement au ralenti, et mémorisés dans des moyens de mémoire comme de nombreuses données échantillonnées acquises, et la quantité d'écart acquise est acquise en traitant des données échantillonnées acquises mémorisées.

10. Dispositif de commande de quantité d'injection de carburant selon la revendication 7, dans lequel la quantité d'écart acquise est corrigée selon la condition de fonctionnement instantanée, et la quantité d'injection pilote souhaitée corrigée est acquise en corrigeant la quantité d'injection pilote souhaitée sur la base de la quantité d'écart acquise corrigée.

11. Dispositif de commande de quantité d'injection de carburant selon la revendication 7, dans lequel les moyens de décision décident si oui ou non un état perturbé prévu est survenu dans le moteur à combustion interne, et lorsque l'état perturbé prévu est survenu, une opération d'acquisition de la quantité d'écart est terminée ou suspendue.
